# EUROPEAN PATENT APPLICATION

(11) **EP 4 704 222 A1**
(43) Date of publication of application: **04.03.2026**
(21) Application number: 24197019.3
(22) Date of filing: 28.08.2024
(51) Int. Cl.: H01M 10/6554, H01M 10/6556, H01M 50/271, H01M 50/289, H01M 50/358, H01M 50/367, H01M 50/30

(54) **ENERGY STORAGE SYSTEM, AND METHOD FOR MANUFACTURING AN ENERGY STORAGE SYSTEM**

(71) Applicant: Rimac Technology LLC, 10431 Sveta Nedelja (HR)
(72) Inventor: Alen, Sagolj, Gorjanska (HR)
(74) Representative: Sonnenberg Harrison Partnerschaft mbB

(57) **Abstract**

An energy storage system is disclosed. The energy storage system comprises at least one boundary element, at least one energy storage means being at least partly housed within and/or substantially close to the at least one boundary element, and at least one gas passage element configured to provide a passage for a gas from an inside of the energy storage system through the at least one gas passage element.

## Description

### FIELD OF THE INVENTION

The present invention relates to an energy storage system.

The present invention further relates to a method for manufacturing an energy storage system.

### BACKGROUND OF THE INVENTION

Cell-to-pack construction in the field of energy storage systems, such as in hybrid electric vehicles (HEV) and electric vehicles (EV), enables providing simplified and improved energy storage systems with enhanced energy density and with reduced number of components. Filler materials, such as foams, have attracted much attention in cell-to-pack construction. The filler materials are intended, for example, to fill the spaces that resulted from the simplification of the structures of the energy storage systems in the cell-to-pack construction. The filler materials may be used for providing stability, structural integrity, thermal runaway mitigation, and/or reducing free air volume.

The filler materials, however, introduce a new set of challenges for the cell-to-pack construction. For example, a major issue concerns equally distributing a filler material in the energy storage system. The filler material should fill all available spaces, areas, and/or zones, between the components of the energy storage system, for encapsulating and embedding purposes. This equal distribution of the filler material should also be rendered possible when a housing of the energy storage system is already closed for assembling purposes.

A further issue concerns distributing homogeneously the filler material in the energy storage system. The gas arranged in the available spaces in an inside of the energy storage system is displaced as the filler material fills the available spaces. As the filler material expands, gas is generated, and this gas is also displaced as the filler material fills said available spaces. The displaced gas may prevent a homogeneous distribution of the filler material if no sufficient gas release is provided. Consequently, in such a case, the filler material may not efficiently fill the available spaces and the displaced gas prevents the filler material from gluing the components and thus from providing stability for the energy storage system. This issue is even more predominant when an energy storage system's housing is already closed, as the displaced gas may remain entrapped inside the energy storage system.

As a potential workaround, it was found to arrange openings on a housing for the energy storage system for exhausting such entrapped gas. However, among others, depending on a position and a dimension of gas bubbles that are formed inside the housing when the filler material, i.e., the foam, is injected, not all gas bubbles may be able to be exhausted through such openings. Thus, even if the negative effect is diminished by the provided openings, these openings may not be sufficient for exhausting and reliving all or at least a majority of the entrapped gas from the energy storage system.

The energy storage system may further comprise elements, such as cold plates, also known as cooling plates. These cold plates may comprise recesses and/or protrusions. As a result, the filler material may be unable to cover equally and homogeneously the surfaces of these cold plates. Accordingly, there may be more gas entrapped in such an energy storage system. However, it is to be noted that this may not be specific to cold plates, but any element with a non-planar geometry may provoke such enhanced entrapping of gas. It is also to be noted that any element with a planar geometry may also provoke such enhanced entrapping of gas.

Against this background, it is an object to provide an improved energy storage system and/or an improved method for manufacturing an energy storage system.

### SUMMARY OF THE INVENTION

The objective is achieved by an energy storage system having the features of claim 1.

The objective is further achieved by a method having the features of claim 12.

In one aspect, there is provided an energy storage system. The energy storage system comprises at least one boundary element, at least one energy storage means being at least partly housed within and/or substantially close to the at least one boundary element, and at least one gas passage element configured to provide a passage for a gas from an inside of the energy storage system through the at least one gas passage element.

It should be noted that the passage of the at least one gas passage element may be defined as comprising at least one access, i.e., an opening, arranged on at least one area and/or surface of the at least one gas passage element. In other words, the at least one passage of the at least one gas passage element may preferably fluidically communicate with at least one area and/or surface of the at least one gas passage element, preferably via the access. The at one gas passage element may thus provide the passage for the gas from the inside of the energy storage system, preferably to a surrounding and/or an outside of the energy storage system.

The at least one passage may further be referred to as a reliving passage, i.e., route, for the gas, in particular for the gas entrapped in the inside of the energy storage system. The at least one gas passage element may preferably act as a "breather" for the gas, in other words, the at least one gas passage element may allow a bi-directional passage for the gas, i.e., from the inside of the energy storage system, in particular, to and from at least one housing element of the energy storage system.

It should be further noted that the passage of the at least one gas passage element may comprise at least one further access arranged on at least one further area and/or surface of the at least one gas passage element. In other words, the passage may traverse, or cross, the at least one gas passage element. The at least one gas passage element may provide the passage for the gas from the inside of the energy storage system, preferably to a surrounding or an outside of the energy storage system.

The passage in the at least one gas passage element may be referred to as an exit, i.e., an exhaust passage for the gas, in particular for the gas entrapped in the inside of the energy storage system. The at least one gas passage element acts therefore as a "reliever" for the gas from the inside of the energy storage system.

The present energy storage system thus provides an improved exhaust of any gas from the inside of the energy storage system, which gas may be trapped or formed inside the energy storage system during assembling, construction and/or application.

In one aspect, the at least one gas passage element is preferably configured to guide and/or dispense the gas from the inside of the energy storage system through the at least one gas passage element.

It shall be understood that "to guide the gas" means that the at least one gas passage element may be configured to direct the gas, for example, air, from the inside of the energy storage system into and preferably through the at least one gas passage element.

It shall be understood that "to dispense the gas" may be referred to as reducing the volume of the gas. The at least one gas passage element may further enable cutting bigger gas bubbles into smaller or finer bubbles, preferably, into fractions of gas bubbles. Gas in form of gas bubbles may therefore be able to enter and pass in the at least one passage from the inside of the energy storage system through the at least one gas passage element.

The at least one gas passage element provides thus an improved gas exhaust of the, particularly entrapped, gas from the inside of the energy storage.

Preferably, the at least one gas passage element is configured to guide and/or dispense the gas from the inside to a surrounding of the energy storage system.

In one aspect, the surrounding of the energy storage system is an outside of the energy storage system, such as an outside environment. The outside environment may be exterior to the energy storage system. Also, the surrounding of the energy storage system may be a construction space of the energy storage system, preferably the construction space comprises an interconnection with the outside environment, such as a central beam. In other words, the surrounding of the energy storage system may also be an area of the inside of the energy storage system. The at least one gas passage element may be configured to guide and/or dispense the gas from a construction space in the inside of the energy storage system where the energy storage means are provided to another construction space in the inside of the energy storage system. The other construction space is, for example, provided inside an outer housing. From such a further construction space, gas is preferably guided or guidable to the outside of the energy storage system. This further guiding may be conducted by a fan.

It should be noted that the at least one passage of the at least one gas passage element may be referred to as a passage area, passage section or a passage volume in the at least one gas passage element. The passage of the at least one gas passage element may be in form of a network and/or a lattice structure. The at least one gas passage element may comprise an interconnected network structure, such as an interconnected channel structure. The interconnected channel structure may comprise randomly arranged, in other words, chaotic, channel interconnections. The interconnected channel structure may comprise pores and/or tubes, such as nano tubes.

In one aspect, the at least one gas passage element may comprise open pores, in other words, a porous open-cell material, and/or a porous tubular-structured material.

In one aspect, the at least one gas passage element may comprise a foam material, preferably comprises a polyurethane open-cell foam.

In one further aspect, the at least one gas passage element comprises graphene and/or at least one ceramic, preferably comprising alumina, cordierite, mullite, zirconium dioxide, and/or silicon carbide, and/or at least one metal, preferably comprising copper, aluminium, nickel, or an alloy thereof, and/or at least one polymer, preferably comprising polyamide, and/or polyurethane and/or epoxy. Ceramics are insulative and have a substantially high density, in comparison to polymers that are insulative and have a substantially low density.

It shall be understood that the term "boundary element" may refer to an element configured to demarcate at least a first component from a second component of the energy storage system. The first component and/or the second component may be a structural component of the energy storage system.

The at least one boundary element may be an element with a fixed structure or with a shrinkable structure, such as a shrink wrap.

In one aspect, the at least one boundary element is selected from at least one of a cooling plate, a vent plate, or one housing element. The cooling plate may be configured for cooling the at least energy storage means. The vent plate may be configured for guiding the gas, especially in an event of a thermal runaway of the at least energy storage means, away from the at least energy storage means to a/the surrounding of the energy storage system. The at least one boundary element may be referred to as an enclosing element and/or a wrapping element. The at least one boundary element may be at least one housing element, the at least one housing element may be configured for at least partly housing the at least one energy storage means.

It shall be understood that the at least one housing element may be referred to as a frame element. The at least one housing element may therefore be partly closed to at least partly house or encompass the at least one energy storage means.

The at least one gas passage element may provide a passage for a gas formed and/or generated and/or exhausted and/or cooled and/or ventilated from the at least one boundary element.

The at least one gas passage element may provide an improved exhaust of the gas formed and/or generated and/or ventilated from the at least one boundary element.

In one aspect, the at least one gas passage element is a layer. Preferably the layer is connected and/or bonded, more preferably the layer is glued or coated to the at least one boundary element. The layer may be integrally formed, most preferably by etching, within the at least one boundary element. Of course, such a layer may also be connected via other connection methods that are not explicitly listed here.

In one aspect, the at least one gas passage element is provided on the at least one boundary element, such that the at least one gas passage element faces the at least one energy storage means.

The at least one gas passage element may provide an improved exhausting of the gas generated by the at least one energy storage means from the inside of the energy storage system.

In one aspect, the at least one gas passage element is comprised between two energy storage means.

In one aspect, the at least one boundary element comprises at least one gas exhaust element configured to exhaust the gas from the inside of the energy storage system to a/the surrounding of the energy storage system. The at least one gas exhaust element may be arranged substantially on top of the surface of the at least one boundary element and may be connected fluidically connected to the surrounding of the energy storage system and/or may be at least partly and preferably fluidically contacted with the at least one gas passage element. The at least one gas exhaust element may be provided through at least one surface of the at least one boundary element.

The gas exhaust element may preferably be selected from at least one of an exhaust opening, an exhaust membrane and/or an exhaust valve, the exhaust valve is preferably a one-way valve. The opening may be provided as a through-hole opening in the at least one boundary element. The membrane may be at least partly permeable for the gas that is to be guided to the surrounding of the energy storage system. The valve may be a mechanical valve that may function via pressure differences. However, the valve may be any type of valve. Also, the valve may be configured for guiding the gas from the inside of the energy storage system to the surrounding, while the valve may inhibit a gas flow from the surrounding to the inside, thus provided one way guidance.

In one aspect, the at least one gas passage element comprises a compressible material, preferably a reversibly compressible material, or a non-compressible material, preferably a rigid material. In case the at least one gas passage element comprises a compressible material, the at least one gas passage element may be compressed during manufacturing of the energy storage system, for example during curing of a filler material that has been introduced inside the energy storage system. In this case, more active areas of elements in the energy storage system, i.e., structures, are connected to the filler material when the gas is exhausted. The at least one gas passage element made of a compressible material thus enables an improved connection between elements in the energy storage system.

It shall be understood that the term "energy storage means" may comprise at least one of an electrochemical cell, a battery cell, a fuel cell, a capacitor, a super-capacitor, and a photovoltaic cell.

It shall be understood that that "substantially close to" may be understood as arranged on, arranged near, arranged in proximity to, adjacent, contiguous, and/or in contact with. The term "close" may refer to a gap of few microns. The at least one energy storage means being substantially close to the at least one boundary element may encompass that a gap may be situated between the at least one energy storage means and the at least one boundary element.

In one aspect, a filler material is provided in the energy storage system for stabilizing the at least one energy storage means and the boundary element. Preferably, the energy storage system comprises at least one introducing element configured for introducing the filler material into the energy storage system. Preferably, the at least one gas passage element is at least partly filled with the filler material, in particular, when the energy storage system is assembled. The at least one gas passage element may also be configured to provide a structural connection between the filler material and the boundary element.

The filler material may be introduced through at least one opening provided on a housing of the energy storage system, the at least one opening representing the at least one introducing element.

The filler material may preferably be provided inside a housing of the energy storage system and may preferably fill the remaining construction spaces inside such a housing, after all components of the energy storage system have been provided inside the housing.

The filler material may be an expendable material, such as a foam material. The filler material may also be a resin-based or glue-based material.

In a further aspect, a method for manufacturing an energy storage system is provided. The method comprises providing at least one boundary element, providing at least one energy storage means being at least partly housed within and/or substantially close to the at least one boundary element, providing at least one gas passage element comprising a passage, and passing a gas from an inside of the energy storage system through the passage of the at least one gas passage element.

The aspects presented for the system also apply for the presented method. Also, the aspects presented for the method apply for the presented system.

It shall be noted that the gas may pass spontaneously from the inside of the energy storage system through the at least one passage of the at least one gas passage element, as the gas tends to occupy all available volume.

Therefore, the method provides an improved exhausting of the gas from the inside of the energy storage system to any type of surrounding of the energy storage system.

The method further provides an improved heat transfer from the inside of the energy storage system.

In a further aspect, the method further comprises introducing a filler material in the inside of the energy storage system, followed by expanding the filler material in the inside.

It shall be noted that the energy storage system, for example, the at least one boundary element, may comprise at least one introducing element for introducing the filler material in the inside of the energy storage system. Also, the at least one introducing element may be provided on a housing of the energy storage system.

Such an introducing element may comprise at least one opening, one membrane, and/or one valve, preferably one unidirectional valve. The introducing element may be arranged in the structure of the at least one boundary element.

It shall be understood that the expansion of the filler material results in displacing the gas of the inside of the energy storage system. The displaced gas may reach the at least one passage of the at least one gas passage element from the inside of the energy storage system, may pass therethrough, i.e., through the passage, and may be exhausted to the surrounding of the energy storage system.

The method may thus enable efficient and effective exhausting an entrapped gas, preferably air, from the inside of the energy storage system.

The distribution of the filler material in the inside of the energy storage system is therefore improved, as there is fewer gas and/or remaining gas bubbles in the inside of the energy storage system. The method enables a homogeneous distribution of the filler material in the energy storage system. Thus, the method provides improved stability and longevity of the energy storage system.

In one aspect, the filler material expands in the at least one gas passage element simultaneously when the gas passes through the at least one gas passage element, and/or after the passing of the gas through the at least one gas passage element.

In one further aspect, the at least one boundary element comprises at least one gas exhaust element. The method further comprises passing the gas through the at least one gas exhaust element to be exhausted to a surrounding of the energy storage system. The gas passes through the at least one gas passage element, then the gas passes through the at least one gas exhaust element. The at least one boundary element may be in contact with a further structural element of the energy storage system, such as a central beam. Thus, the gas may be guided through the gas exhaust element to the central beam, in this case, representing the surrounding of the energy storage system. The central beam may comprise a T-like or U-like or double-U-like structure, thereby providing a channel structure that may be used for further guiding the gas to the outside of the energy storage system. Thus, the energy storage system may be part of a bigger storage unit that may comprise multiple energy storage systems.

The method enables an improved exhausting of the gas from the inside of the energy storage system to the surrounding of the energy storage system.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

Further possible implementations of the invention also comprise not explicitly mentioned combinations of any features or embodiments that are described above or below regarding the exemplary embodiments. In this case, a person skilled in the art will also add individual aspects as enhancements or supplementation to the respective basic form of the invention.

### DESCRIPTION OF THE FIGURES

Fig. 1 shows a schematic example of at least one gas passage element of an energy storage system.
Fig. 2 shows a view of at least one gas passage element.
Fig. 3 shows a schematic example of an energy storage system.
Fig. 4 shows a refinement of an energy storage system.
Fig. 5 shows a schematic flow chart of a method for manufacturing an energy storage system.

### DETAILED DESCRIPTION OF THE INVENTION

The invention will now be described on the basis of the provided figures. It will be understood that the aspects and/or embodiments and/or refinements of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

Unless indicated to the contrary, elements that are the same or functionally the same have been given the same reference signs in the figures. It should also be noted that the illustrations in the figures are not necessarily true to scale.

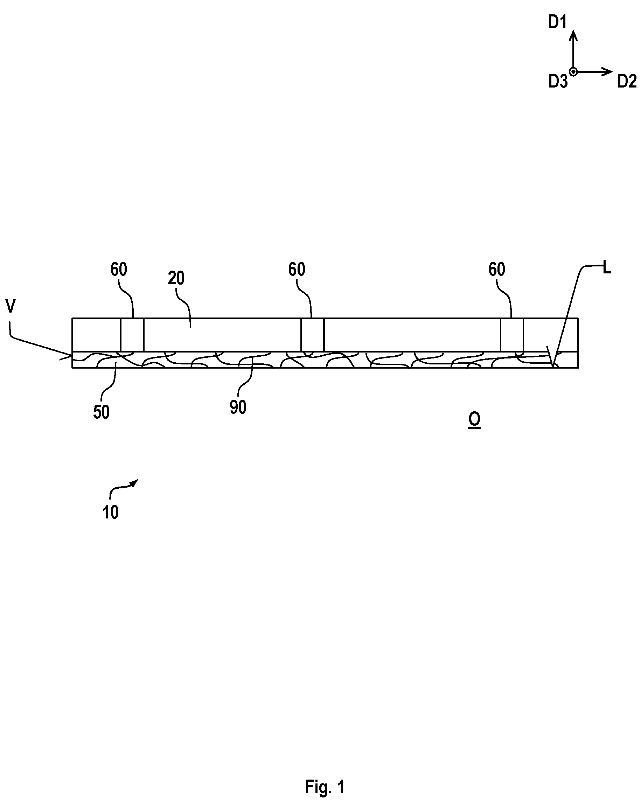

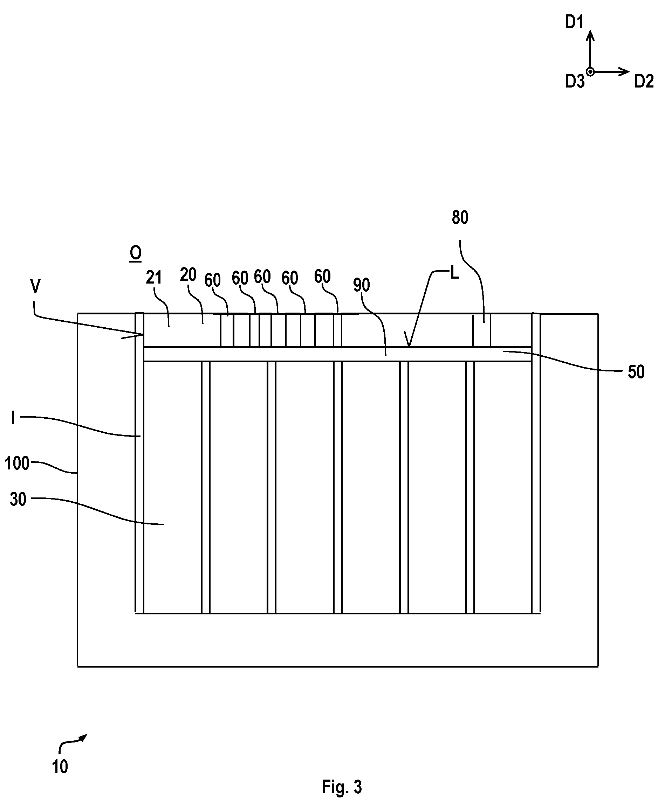

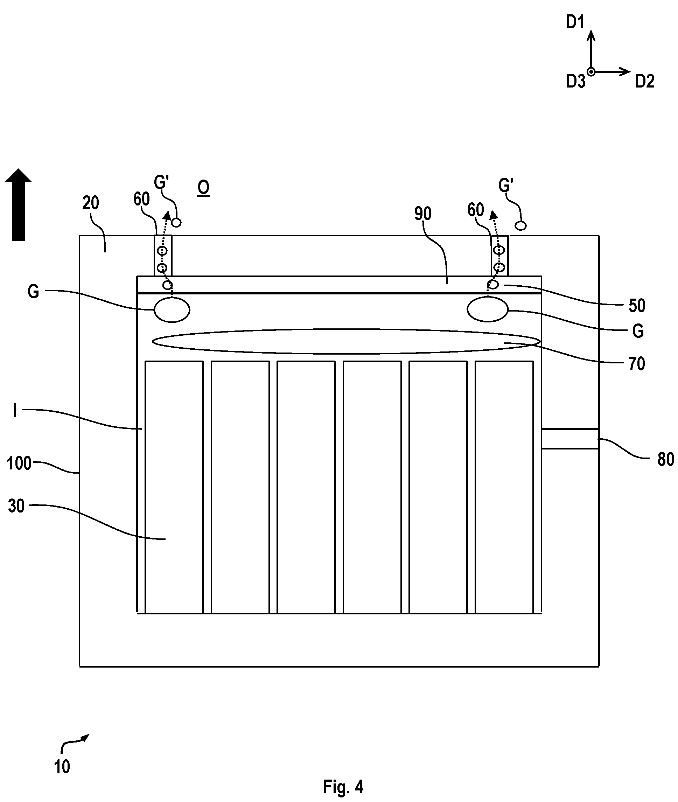

Fig. 1 shows a part of an energy storage system 10. The energy storage system 10 comprises at least one boundary element 20, at least one energy storage means 30 (shown in Figs. 3 and 4) and at least one gas passage element 50. The at least one gas passage element 50 is configured to provide at least one passage 90 for a gas G from an inside I of the energy storage system 10 through the at least one gas passage element 50, particularly through the at least one passage 90. The at least one energy storage means 30 is at least partly housed within and/or substantially close to the at least one boundary element 20 (see Figs. 3 and 4).

In the example of Fig. 1, the at least one gas passage element 50 is a layer provided on a surface of the at least one boundary element 20. The passage 90 traverses the layer of the at least one gas passage element 50 on either sides, in other words, on opposite sides surfaces of the gas passage element 50. The shown passage 90 further passes from a first surface to a second surface, the second surface being perpendicular to the first surface. The first surface may be termed longitudinal surface L of the gas passage element 50, and the second surface may be termed vertical surface V of the gas passage element 50. In the example of Fig. 1, the passage 90 comprises an interconnected network / channel structure.

The gas therefore does not necessarily pass through the passage 90 in one direction D1, also termed vertical direction. In one non-limiting example and shown on Fig. 1, the gas may enter the gas passage element 50 from at least one of the surface L and/or at least one of the surface V of the at least one gas passage element 50. Only for example, the gas then passes inside the passage element 50 through the at least one passage 90 and is exhausted in the first direction D1 from the at least one of the longitudinal surface L, and/or in the second direction D2 from the at least one of the vertical surface V. Of course, this should not be considered as limiting, as in other examples, the gas may be exhausted in any direction from any surface of the at least one gas passage element.

In one example, the layer of the at least one gas passage element 50 is thin, in other words, may have a thickness below 2 mm. The layer compresses, for example, to below 1, for example, to 0.5 mm, without the layer being deteriorated under compression. The structure of the passage 90 may further not be deteriorated under compression. The at least one gas passage element 50 can therefore provide the passage 90 for the gas G to pass from the inside I of the energy storage system 10 through the at least one gas passage element 50 even in case of a shock and/or a pressure applied on the energy storage system and/or on the at least one gas passage element 50.

The at least one gas passage element 50 is, for example, compressible in a reversible manner, i.e., be a reversibly compressible material. The at least one gas passage element 50 is, in another example, a non-compressible material, i.e., a rigid material.

The at least one gas passage element 50 is arranged, for example, on the at least one boundary element 20. In one non-limiting example, the at least one gas passage element 50 is arranged on a surface of the at least one boundary element 20 facing the at least one of the longitudinal surface L, for example, a bottom surface of the at least one boundary element 20. In another example not shown, the at least one gas passage element 50 is arranged on a surface of the at least one boundary element 20 facing the longitudinal surface L, for example, a top surface of the at least one boundary element 20. In another example not shown, the at least one gas passage element 50 is arranged on a surface of the at least one boundary element 20 facing the at least one of the vertical surface V, in other words, on at least one of the side surface of the boundary element 20.

In one example, the at least one gas passage element 50 is connected or contacted with the at least one boundary element 20, preferably glued or coated on the at least one boundary element 20. In another example not shown, the at least one gas passage element 50 is integrally formed, preferably by etching, within the at least one boundary element 20.

The at least one gas passage element 50 is, in a further example (not shown), arranged between at least two energy storage means 30.

In one example, the at least one boundary element 20 comprises at least one gas exhaust element 60. The at least one gas exhaust element 60 is configured to exhaust the gas G from the inside I of the energy storage system 10 in the direction D 1. As illustrated in Fig. 1, the at least one gas exhaust element 60 coincides with the passage 90 of the at least one gas passage element 50. In one example, the at least one gas exhaust element 60 is contacted with the passage 90 of the at least one gas passage element 50.

In one example, the at least one gas exhaust element 60 is provided as a through-hole through the at least one boundary element 20 in the direction D1. The at least one gas exhaust element 60 in the shown example traverses the opposite bottom and top surfaces of the at least one boundary element 20.

The gas exhaust element 60 is selected from at least one of an exhaust opening, an exhaust membrane and/or an exhaust valve. The gas G passes through the at least one passage 90 to be outputted, i.e., exhausted, via the at least one gas exhaust element 60. The gas G then passes to a surrounding O of the energy storage system 10.

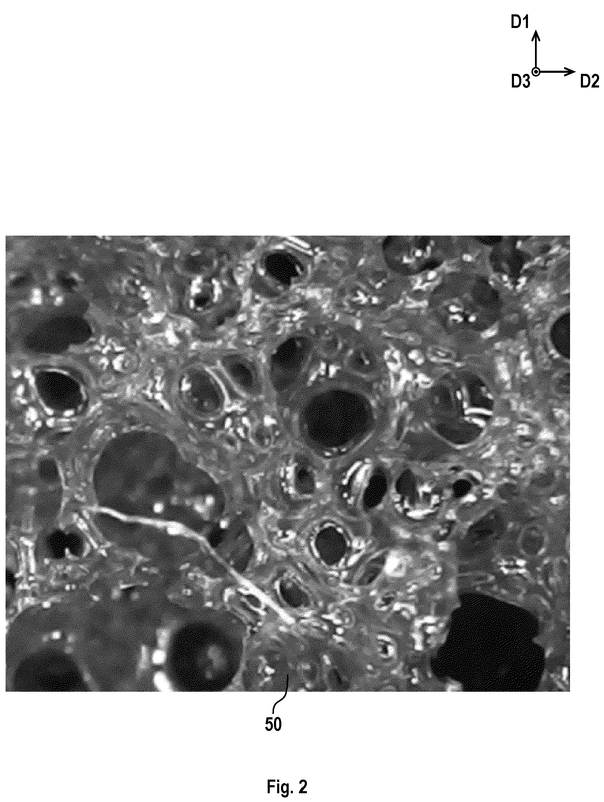

Fig 2 shows a further view of the at least one gas passage element 50. Fig. 2 is a preferred view of the at least one gas passage element 50. The at least one gas passage element 50 comprises a porous polyurethane open-cell foam. The at least one passage 90 that is provided for the gas G exhaust is provided by the open cells, i.e., by multiple cell-accesses being arranged on the porous surface of the gas passage element 50 and forming multiple channels through the gas passage element 50. Preferably, at least a part of the open-cell channel structure provides a fluidic communication between the inside I and the surrounding O of the energy storage system 10.

The at least one gas passage element 50 comprises, in a further non-limiting example, a porous tubular-structured material. The access of the passage 90 in this example comprises the tubes arranged on the surfaces of the at least one gas passage element 50 and communicating with the inside I of the energy storage 10.

The at least one gas passage element 50 may be a foam, preferably may be selected from one of graphene, and/or at least one ceramic, and/or at least one metal, and/or at least one polymer. The ceramic comprises, for example, alumina, cordierite, mullite, zirconium dioxide, silicon carbide, or a combination thereof. The metal comprises copper, aluminium, nickel, an alloy thereof, or a combination thereof. The polymer may comprise polyamide, polyurethane, epoxy, or a combination thereof.

Fig. 3 shows a schematic example of the energy storage system 10.

The at least one gas passage element 50 is provided, for example, on the at least one boundary element 20 such that the at least one gas passage element 50 faces the at least one energy storage means 30. The at least one gas passage element 50 illustrated in Fig. 3 faces the at least one energy storage means 30 the longitudinal surface L. In another non-shown example, the at least one gas passage element 50 faces the at least one energy storage means 30 with at least one of the vertical surfaces V.

Fig. 3 shows the at least one boundary element 20 as a housing element 21 of a housing 100. The at least one housing element 21 provides a lid of the housing 100, such that the at least one boundary element 20 at least partly houses the at least one energy storage means 30 together with the housing 100. The at least one boundary element 20 is, in the non-limiting example, substantially close to the at least one energy storage means 30.

The at least one boundary element 20 is, in a not shown example, a cooling plate. The cooling plate is configured for cooling the at least energy storage means 30. The at least one boundary element 20 is, in a further not shown example, a vent plate. The vent plate is configured for guiding the gas G, especially in an event of a thermal runaway of the at least energy storage means 30, away from the at least energy storage means 30 to the surrounding O of the energy storage system 10.

As shown on Fig.3, the surrounding O of the energy storage system 10 is an outside environment that surrounds the energy storage system 10. In an example (not shown), the surrounding O is a construction space of the energy storage system 10 comprising an interconnection with the outside environment. The construction space may be, for example, provided by a central beam that is in contact or adjacent to the energy storage system 10. In such an example gas G may be passed, for example, through a fan or the like, from the construction space to the outside environment.

Fig. 4 shows a further refinement of the energy storage system 10. The energy storage system 10 comprises a filler material 70 provided inside the energy storage system 10. The filler material 70 is, in one example, an expandable material. In this example, the at least one boundary element 20 is integrally form with the housing 100. The filler material 70 is, in a further example, a self-expandable material, such as a foam material. The filler material 70 as illustrated in Fig. 4 may expand in the first direction D1. However, this should be not considered as limiting. Of course, the filler material may expand in every other direction or in different directions inside the energy storage system 10. When the filler material 70 expands in the inside I of the energy storage 70, it increases its volume and thereby displaces the gas G in the inside I. Thereby, the displaced gas may form gas bubbles. The gas G, i.e. the gas bubbles, then passes through the at least one passage 90 of the at least one gas passage 50. The gas G is dispensed, i.e., cut into smaller gas bubbles G, i.e., dispensed gas G', by entering the at least one passage 90 and/or by passing through the at least one passage 90. The dispensed gas G' is further guided from the inside I through the at least one gas passage element 50. As illustrated in Fig. 4, the dispensed gas G' further passes through the at least one gas exhaust element 60 to the surrounding O of the energy storage system 10.

This enables removing, i.e., exhausting, the gas G, i.e., the gas bubbles, from the inside I of the energy storage system 10. The filler material 70 may therefore fill, in an improved manner, a larger volume of the inside I of the energy storage system 10. The contact between the surfaces of structural components within the energy storage system 10 is thus further improved by the filler material 70. The filler material 70 is therefore more equally and more homogeneously distributed in the inside I of the energy storage system 10.

The filler material 70, in one example, fills the at least one gas passage element 50. The at least one gas passage element 50 comprises, in one example, multiple layers, i.e., webs, or stacked layers. The multiple layers of the at least one gas passage element 50 may get filled, i.e., one layer after the other layer, by the filler material 70, as the at least one gas passage element 50 remains in contact with the filler material 70. In other words, even if one layer of the at least one gas passage element 50 is filled, at least one of the layer above that is not (yet) filled with the filler material enables the passage of the gas G. The gas G passes therefore progressively from one layer to the other, as the layer of the at least one gas passage element 50 may get filled progressively by the filler material 70. Once or meanwhile the layers of the at least one gas passage element 50 are filled, the filler material 70 gets cured, so that a structural stable part made of the filler material 70 and the at least one gas passage element 50 is formed. This further enables an improved structural connection of the filler material 70 to the boundary element 20, i.e., via providing the at least one gas passage element 50.

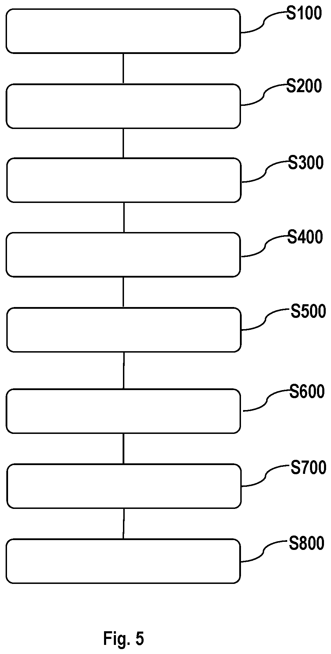

Fig. 5 shows a schematic flow chart of a method for manufacturing the energy storage system 10. In a step S 100, the method comprises providing the at least one boundary element 20. In a step S200, the method comprises providing the at least one energy storage means 30. In one example, the providing of the step S200 comprises introducing the at least one energy storage means 30 in the at least one boundary element 20, so that the at least one energy storage means 30 is at least partly housed within the at least one boundary element 20. In one example, the providing of the step S200 comprises arranging the at least one energy storage means 30 near the at least one boundary element 20, in other words substantially close to the at least one boundary element 20. In other words, the at least one energy storage 30 may be spaced apart from the at least one boundary element 20 by a gap, for example, of few microns. In a step S300, the method further comprises providing the at least one gas passage element 50 comprising the passage 90. In a step S700, the method comprises passing the gas G from the inside I of the energy storage system 10 through the at least one passage 90 of the at least one gas passage element 50.

In a step S400, the method comprises introducing the filler material 70 in the inside I of the energy storage system 10.

In one example, the filler material 70 is introduced in the step S400 in the energy storage system 10 through at least one introducing element 80. The at least one introducing element 80 is arranged, for example, on the at least one boundary element 20 and/or in another position, for example on a side wall, of the housing 100 (see Fig. 4). The introducing element 80 comprises, for example, at least one of at least one opening, one membrane and one valve, preferably one unidirectional valve. The introducing element 80 may be arranged, in a further example, in the at least one boundary element 20 (see Fig. 3). This enables filling of the filler material 70 in a closed state of the housing 100 and/or of the at least energy storage system 10. In one example, the introducing in the step S400 is a continuous process.

The filler material 70 further expands in a step S500 in the inside I of the energy storage system 10. In one further example, the filler material 70 further expands in a step S600 in the at least one gas passage element 50. In one further example, the step S500 comprises the step S600.

In one example, the introducing in the step S400 of the filler material 70 is conducted while the at least energy storage system 10 is open. The passing in the step S700 of the gas G occurs, in one example, in an open state of the energy storage system 10 and/or in a close state of the energy storage system 10.

In one example, the at least one boundary element 20 comprises the at least one gas exhaust element 60, preferably arranged on top or near top side of the at least one boundary element 20. The method comprises, in this example, passing in a step S800 the gas G through the at least one gas exhaust element 60 to be exhausted to the surrounding O of the energy storage system 10.

### LIST OF REFERENCE SIGNS

- 10: energy storage system
- 20: boundary element
- 21: housing element
- 30: energy storage means
- 50: gas passage element
- 60: gas exhaust element
- 70: filler material
- 80: introducing element
- 90: passage
- 100: housing

- D1: direction
- D2: direction
- L: longitudinal surface
- V: vertical surface
- G: gas
- G': dispensed gas
- I: inside
- O: surrounding

- S100: method step "providing"
- S200: method step "providing"
- S300: method step "providing"
- S400: method step "introducing"
- S500: method step "expanding"
- S600: method step "expanding"
- S700: method step "passing"
- S800: method step "passing"

## Claims

1. An energy storage system (10) comprising:
at least one boundary element (20);
at least one energy storage means (30) being at least partly housed within and/or substantially close to the at least one boundary element (20); and
at least one gas passage element (50) configured to provide a passage (90) for a gas (G) from an inside (I) of the energy storage system (10) through the at least one gas passage element (50).

2. The energy storage system (10) of claim 1, wherein
the at least one gas passage element (50) configured to guide and/or dispense the gas (G) from the inside (I) through the at least one gas passage element (50);
preferably from the inside (I) through the at least one gas passage element (50) to a surrounding (O) of the energy storage system (10).

3. The energy storage system (10) of claim 1 or 2, wherein
the at least one gas passage element (50) is a layer;
preferably the layer is connected, most preferably glued or coated, to the at least one boundary element (20), or integrally formed, most preferably by etching, within the at least one boundary element (20).

4. The energy storage system (10) of any one of the preceding claims, wherein
the at least one gas passage element (50) is provided on the at least one boundary element (20) such that the at least one gas passage element (50) faces the at least one energy storage means (30).

5. The energy storage system (10) of any one of the preceding claims, wherein
the at least one gas passage element (50) comprises a compressible material, preferably a reversibly compressible material.

6. The energy storage system (10) of any one of the preceding claims, wherein the at least one gas passage element (50) comprises
a foam material, preferably a porous foam material, more preferably a porous open-cell foam material, and/or
a porous tubular-structured material.

7. The energy storage system (10) of any one of the preceding claims, wherein the at least one gas passage element (50) comprises:
- graphene; and/or
- at least one ceramic; preferably comprising alumina, cordierite, mullite, zirconium dioxide, and/or silicon carbide; and/or
- at least one metal; preferably comprising copper, aluminium, nickel, or an alloy thereof; and/or
- at least one polymer, preferably comprising polyamide, and/or polyurethane and/ or epoxy.

8. The energy storage system (10) of any one of the above claims, wherein the at least one boundary element (20) is selected from at least one of:
- a cooling plate, the cooling plate configured for cooling the at least energy storage means (30);
- a vent plate, the vent plate configured for guiding the gas (G), especially in an event of a thermal runaway of the at least energy storage means (30), away from the at least energy storage means (30) to a/the surrounding (O) of the energy storage system (10); and
- at least one housing element, the at least one housing element configured for at least partly housing the at least one energy storage means (30).

9. The energy storage system (10) of any one of the above claims, wherein
the at least one boundary element (20) comprises at least one gas exhaust element (60) configured to exhaust the gas (G) from the inside (I) of the energy storage system (10) to a/the surrounding (O) of the energy storage system (10); and
the at least one gas exhaust element (60) arranged substantially on top of a surface (B) of the at least one boundary element (20) and/or contacted with the at least one gas passage element (50);
optionally the gas exhaust element (60) being selected from at least one of an exhaust opening, an exhaust membrane and/or an exhaust valve.

10. The energy storage system (10) of any one of the preceding claims, wherein
a/the surrounding (O) of the energy storage system (10) is an outside environment that surrounds the energy storage system (10); or wherein
a/the surrounding (O) of the energy storage system (10) is a construction space of the energy storage system (10) that preferably comprises an interconnection with the outside environment.

11. The energy storage system (10) of any one of the preceding claims, comprising
a filler material (70) provided in the energy storage system (10) for at least stabilizing the at least one energy storage means (30) and the at least one boundary element (20), wherein the energy storage system (10) preferably comprises at least one introducing element (80) configured for introducing the filler material (70) into the energy storage system (10), wherein the at least one gas passage element (50) may be at least partly filled with the filler material (70), and/or
wherein the at least one gas passage element (50) is configured to provide a structural connection between the filler material (70) and at least a part of the boundary element (20).

12. A method for manufacturing an energy storage system (10), the method comprises:
providing (S100) at least one boundary element (20);
providing (S200) at least one energy storage means (30) being at least partly housed within and/or substantially close to the at least one boundary element (20);
providing (S300) at least one gas passage element (50) comprising a passage (90); and
passing (S700) a gas (G) from an inside (I) of the energy storage system (10) through the passage (90) of the at least one gas passage element (50).

13. The method of claim 12, further comprising
introducing (S400) a filler material (70) in the inside (I) of the energy storage system (10); and
expanding (S500) the filler material (70) in the inside (I).

14. The method of claim 12 or 13, further comprising
expanding (S600) the filler material (70) in the at least one gas passage element (50).

15. The method of any one of claims 12 to 14, the at least one boundary element (20) comprising at least one gas exhaust element (60); the method further comprising
passing (S800) the gas (G) through the at least one gas exhaust element (60) to be exhausted to a surrounding (O) of the energy storage system (10).
